# EUROPEAN PATENT SPECIFICATION

(11) **EP 3 653 579 B1**
(45) Date of publication and mention of the grant of the patent: **19.07.2023**
(21) Application number: 18382820.1
(22) Date of filing: 16.11.2018
(51) Int. Cl.: C01B 33/158

(54) **SILICA AEROGEL REINFORCED WITH CELLULOSIC SPONGE AND PROCESS FOR ITS PREPARATION**
MIT CELLULOSESCHWAMM VERSTÄRKTES SILICA-AEROGEL UND VERFAHREN ZU DESSEN HERSTELLUNG
AÉROGEL DE SILICE RENFORCÉ AVEC UNE ÉPONGE DE CELLULOSE ET SON PROCÉDÉ DE PRÉPARATION

(43) Date of publication of application: 20.05.2020
(73) Proprietor: Fundación Tecnalia Research & Innovation, 20009 San Sebastián, Guipúzcoa (ES)
(72) Inventor: Tejado Etayo, Álvaro, 20009 San Sebastián - Guipúzcoa (ES); Goiti Ugarte, Eunate, 20009 San Sebastián - Guipúzcoa (ES); Ocejo Lopez de Guereña, Marta, 20009 San Sebastián - Guipúzcoa (ES); Salvador Polo, Alejandro, 20009 San Sebastián - Guipúzcoa (ES)
(74) Representative: Balder IP Law, S.L.

(56) References cited:
- EP-B1- 3 060 603
- WO-A1-2017/155456
- HE JIAN ET AL: "Superelastic and superhydrophobic bacterial cellulose/silica aerogels with hierarchical cellular structure for oil absorption and recovery", JOURNAL OF HAZARDOUS MATERIALS, ELSEVIER, AMSTERDAM, NL, vol. 346, 18 December 2017 (2017-12-18), pages 199-207, XP085324092, ISSN: 0304-3894, DOI: 10.1016/J.JHAZMAT.2017.12.045
- MENGMENG CAI ET AL: "Preparation of compressible silica aerogel reinforced by bacterial cellulose using tetraethylorthosilicate and methyltrimethoxylsilane co-precursor", JOURNAL OF NON-CRYSTALLINE SOLIDS., vol. 481, 1 February 2018 (2018-02-01), pages 622-626, XP55572163, NL ISSN: 0022-3093, DOI: 10.1016/j.jnoncrysol.2017.12.015
- JIE CAI ET AL: "Cellulose-Silica Nanocomposite Aerogels by In Situ Formation of Silica in Cellulose Gel", ANGEWANDTE CHEMIE INTERNATIONAL EDITION, vol. 51, no. 9, 27 February 2012 (2012-02-27), pages 2076-2079, XP55572054, DE ISSN: 1433-7851, DOI: 10.1002/anie.201105730
- LIU SHILIN ET AL: "High strength cellulose aerogels prepared by spatially confined synthesis of silica in bioscaffolds", COLLOIDS AND SURFACES A: PHYSIOCHEMICAL AND ENGINEERING ASPECTS, vol. 439, 21 November 2012 (2012-11-21), pages 159-166, XP028764663, ISSN: 0927-7757, DOI: 10.1016/J.COLSURFA.2012.11.020
- JAXEL JULIEN ET AL: "Thermal superinsulating silica aerogels reinforced with short man-made cellulose fibers", COMPOSITES PART A: APPLIED SCIENCE AND MANUFACTURING, vol. 103, 3 October 2017 (2017-10-03), pages 113-121, XP085272769, ISSN: 1359-835X, DOI: 10.1016/J.COMPOSITESA.2017.09.018
- JOHAN ERLANDSSON ET AL: "Cross-Linked and Shapeable Porous 3D Substrates from Freeze-Linked Cellulose Nanofibrils", BIOMACROMOLECULES, vol. 20, no. 2, 5 November 2018 (2018-11-05), pages 728-737, XP55571882, US ISSN: 1525-7797, DOI: 10.1021/acs.biomac.8b01412

## Description

### FIELD OF THE INVENTION

The present invention is related to new hybrid aerogels with good thermal conductivity and excellent mechanical properties and to a process for its preparation. This new hybrid material is useful for manufacturing for example construction elements for thermal and/or acoustic insulation.

### BACKGROUND OF THE INVENTION

Silica aerogels are lightweight and highly porous materials, with a three-dimensional network of silica particles, which are obtained by extracting the liquid phase of silica gels under supercritical conditions. Due to their outstanding characteristics, such as extremely low thermal conductivity in ambient conditions (0.013-0.020 W/mK), low density, high porosity and high specific surface area, they have found excellent potential application for thermal insulation systems in aeronautical/aerospace and earthly domains, for environment clean up and protection, heat storage devices, transparent windows systems, thickening agents in paints, etc. However, native silica aerogels are fragile and sensitive at relatively low stresses, which limit their application. More durable aerogels, with higher strength and stiffness, can be obtained by proper selection of the silane precursors, and constructing the silica inorganic networks by compounding them with different organic polymers or different fiber networks. For example, silica aerogels have been reinforced by the incorporation of various fibrous supporting materials, such as carbon nanofibers and fiberglass into the aerogel systems, or by building interpenetrated network either with synthetic or natural polymers with different results. In all cases the improvements in mechanical properties come at the expense of thermal conductivity.

Yuan et al., in Journal of Hazardous Materials 2018, 346, 199-207, disclose bacterial cellulose aerogels/silica aerogels which are prepared using three-dimensional self-assembled bacterial cellulose skeleton as reinforcement and methyltriethoxysilane-derived silica aerogels as filler. Bacterial cellulose is known to be produced by aerobic bacteria and exists as a basic structure of fibril consisting of β(1→4) glucan chains which are held together via inter- and intra-hydrogen bonding.

Recently Jaxel et. al., in Composites: Part A 103 (2017) 113-121, disclose APD (ambient pressure drying) and SCD (supercritical drying) silica aerogels reinforced with short man-made cellulose fibers (TENCEL^{®} fibers) and have studied the influence of their fiber length (from 2 mm to 12 mm) and concentration (from 0 to 2 vol%) on the thermal conductivity and mechanical properties of the reinforced aerogels. As it can be observed from the obtained results, the disclosed silica aerogels show good thermal conductivities of about 0.015 to 0.018 W/mK, and relative good mechanical properties.

However, in spite of the efforts done so far, there is still the need in the state of the art of providing alternative reinforced silica aerogels that show good thermal conductivity and very good mechanical properties, like maximum stress and/or Young Modulus and/or strain at maximum stress, that perform satisfactorily as thermal and/or acoustic insulation materials.

### SUMMARY OF THE INVENTION

Surprisingly the inventors have found a new reinforced silica aerogel material which shows good thermal conductivity and enhanced mechanical properties.

Specifically the inventors have shown that it is possible to obtain a new hybrid silica aerogel by a method which comprises preparing first a three-dimensional (3D) cellulosic sponge starting from a suspension comprising very short cellulose fibers of less than 2 mm in average length, pursuant to the method described in document EP3060603A1, squeezing said cellulosic sponge to eliminate part of its water content, then soaking the squeezed cellulosic sponge with a silica sol-gel precursor solution and carrying out a sol-gel method.

The present invention relates in a first aspect to a process for manufacturing a hybrid aerogel which comprises:
(i) treating an aqueous suspension of cellulose fibers of less than 2 mm average length with periodate to render a dialdehyde cellulose fibers suspension,
(ii) adjusting the pH of the dialdehyde cellulose fibers suspension to a value between 2.5 and 5.5,
(iii) freezing the suspension obtained in step (ii) to render a three dimensional structure,
(iv) thawing the three dimensional structure obtained in step (iii) to render the cellulosic sponge;
(v) squeezing the water from the cellulosic sponge,
(vi) soaking the squeezed cellulosic sponge with a silica sol-gel precursor solution, wherein the sol-gel precursor solution is an aqueous silicic acid solution, wherein pH is adjusted in the range of 4 to 5 by adding a basic catalyst, and
(vii) carrying out a sol-gel method to obtain the hybrid aerogel.

The present invention relates in another aspect to a hybrid aerogel obtained by the method for manufacturing above disclosed or comprising: 1) a 3D cellulosic sponge made from cellulose fibers of less than 2 mm average length and 2) a silica aerogel structure within or in said 3D cellulosic sponge, wherein said 3D cellulosic sponge comprises a three dimensional structure of cross-linked cellulosic fibers of less than 2mm average length which are bonded by cyclic acetal groups.

In still another aspect the present invention relates to the use of the hybrid aerogel of the invention for different applications, in which advantage can be taken from its characteristics and properties of low thermal conductivity and high mechanical properties, for example as thermal and/or acoustic insulation elements, or for the fabrication of said elements, in the building or the aeronautic sector, or in refrigeration systems, or heat accumulators, to cite only a few.

### DESCRIPTION OF THE INVENTION

Hereinafter, the present invention will be described in more detail to allow for a clearer understanding of the present invention.

The present invention relates in a first aspect to a process for manufacturing a hybrid aerogel which comprises:
(i) treating an aqueous suspension of cellulose fibers of less than 2 mm average length with periodate to render a dialdehyde cellulose fibers suspension,
(ii) adjusting the pH of the dialdehyde cellulose fibers suspension to a value between 2.5 and 5.5,
(iii) freezing the suspension obtained in step (ii) to render a three dimensional structure,
(iv) thawing the three dimensional structure obtained in step (iii) to render a cellulosic sponge;
(v) squeezing the water from the cellulosic sponge,
(vi) soaking the squeezed cellulosic sponge with a silica sol-gel precursor solution, wherein the sol-gel precursor solution is an aqueous silicic acid solution, wherein pH is adjusted in the range of 4 to 5 by adding a basic catalyst, and
(vii) carrying out a sol-gel method to obtain the hybrid aerogel.

### Cellulose fibers of less than 2 mm average length

The term "cellulose fibers of less than 2 mm average length", as used in the present invention should be understood to comprise all possible cellulose fibers, extracted from any kind of cellulosic compounds wherein the cellulose is in the form of fibers, and regardless if they have been or not subjected to a previous conventional treatment, be it chemical, mechanical or enzymatic as explained further below. More specifically the term "cellulose fibers of less than 2 mm average length" is explained in the following.

It includes cellulose fibers coming from any plant (such as conifers -e.g. pine, spruce, fir, etc.-, deciduous -e.g. eucalyptus, birch, poplar, etc.- or annual plants -e.g. cotton, wheat, rice, ramie, sisal, flax, hemp, etc.-) and algae (such as algae belonging to the orders *Cladophorales* -e.g. *Cladophora, Chaetomorpha, Rhizoclonium* and *Microdyction-* and *Siphonocladales* -e.g. *Valonia, Dictyosphaeria, Siphonocladus* and *Boergesenia*), as well as those produced naturally by certain enzymes (e.g. bacteria belonging to the *Acetobacter* family)*.* Among them, those cellulose fibers obtained from coniferous or deciduous wood pulps, such as pine or eucalyptus pulps, are considered of special interest in the frame of this invention.

The cellulose fibers (*aka* "cellulose pulp" in the papermaking field) as they exist in plants generally comprise fibrillar structures of an average diameter of 10-65 µm and average length of 0.5-6 mm, or an average diameter of 20-45 µm and average length of 0.7-4.5 mm, or an average diameter of 20-40 µm and average length of 0.7-2 mm, that can be longitudinally split into finer threads: (i) of around tens of nanometers to hundreds of nanometers, for example from 50 nm to 600 nm, in average diameter, and from several microns to hundreds of microns, for example from 10 µm to 500 µm, in average length, which are often called cellulose microfibers, and/or (ii) of around 3 nm to tens of nanometers, for example from 5-20 nm, in average diameter, and from 600 nm to up to several microns, for example from 600 nm to 10 µm, in average length, which are often called cellulose nanofibers. There is not a clearly defined nomenclature for these finer threads, which are cellulose micro- and nanostructures, and terms like cellulose nanofibers, cellulose microfibers (which are "bundles" of nanofibers), microfibrillated cellulose, cellulose nanofibrils, cellulose filaments and others, are often used indistinctly in the art. In the context of the present invention all these finer threads, which together are also sometimes referred to as "micro nanofibrillated cellulose (MNFC)" in the art, all the cellulose fibers as above disclosed provided their average length is less than 2mm, and mixtures thereof, are to be understood as comprised within the term "cellulose fibers of less than 2 mm average length", that can be used in the present invention.

In some embodiments the hybrid aerogel is manufactured with cellulose fibers presenting an average length between 0.5 and 1.9 mm, more particularly between 0.6 and 1.8 mm, and even more particularly between 0.7 and 1.7 mm average length. For example cellulose fibers present an average length of about 0.6 mm, or about 0.8 mm, or about 1.0 mm, or about 1.1 mm or about 1.2 mm, or about 1.3 mm, or about 1.4 mm, or about 1.5 mm, or about 1.6 mm.

In some embodiments the hybrid aerogel is manufactured with cellulose microfibers, (which are bundles of nanofibers) of different average diameters and lengths. In some examples the cellulose microfibers present an average diameter of 50 nm-600 nm, and an average length of 10-500 µm. In some embodiments the cellulose microfibers present an average diameter of 50 nm-200 nm, and an average length of 200-500 µm, in particular an average diameter of 100 nm and an average length of 400 µm.

In some embodiments the hybrid aerogel is manufactured with cellulose nanofibers presenting an average diameter of 2-50 nm, or 3-40 nm, or 4-30 nm, or 5-20 nm and an average length of 600 nm - 10 µm. In other embodiments cellulose nanofibers present an average diameter of 2-50 nm, or 3-40 nm, or 4-30 nm, or 5-20 nm and an average length of 800 nm - 5 µm. In other embodiments the cellulose nanofibers present an average diameter of 2-50 nm, or 3-40 nm, or 4-30 nm, or 5-20 nm and an average length of 900 nm - 2 µm.

Also, in the context of the present invention, "cellulose fibers of less than 2 mm average length" comprise all the above disclosed structures of all possible sizes, which have been subjected to mechanical, chemical or enzymatic pretreatments as explained in the following.

The application of mechanical shear action on cellulose pulp suspensions (called in papermaking "beating" or "refining") causes fibrillation (i.e. partial structural disintegration) of fibers, which results in a substantial increase of fiber surface area and thus bonding density. In papermaking, the increase in paper strength due to this pretreatment on fibers can reach more than 20 times that of non-treated paper. Mechanical action on cellulose fibers can be performed also in the form of grinding, in this case cutting the fibers into shorter pieces. Cellulose fibers can be chemically treated (i.e. functionalized) by different methods with the aim of modifying their chemical nature. Chemical pretreatments can be performed either to purify the cellulosic content of cellulose fibers or to modify the natural behaviour of those cellulose fibers by introducing new chemical groups into their molecular structure. When the aim is purifying the cellulosic content, a large number of so-called "bleaching" treatments can be performed (among others) according to well-known procedures, which might use chlorine dioxide, hydrogen peroxide, ozone, or others reactants, to remove impurities, such as lignin and hemicelluloses. When the aim is changing the natural behaviour of the cellulose fibers, by changing their chemical nature, most methods use basic chemistry, like oxidizing some of the hydroxyl groups to carboxyl groups, by using oxidizing agents such as chlorite, chlorine, hydrogen peroxide, periodate, etc. Also the sulfation of cellulose with sulfuric acid in the presence of an aliphatic alcohol giving water-soluble cellulose sulfates has been disclosed in several patents: a) US2539451, and b) US2559914. Other traditional methods deal with attaching molecules to cellulose fibers especially (but not limited to) via esterification or etherification, like for example carboxymethylation with α-halo-acetic compounds as disclosed in patents a) JP72014128-B, and b) JP52069990-A; JP81016161-B. Moreover, it is known that cellulose fibers can be submitted to enzymatic reactions with certain enzymes (e.g. cellulases, xylanases, endo-glucanases, etc.) which lead to improved performance of the fibers. In the frame of this invention, any cellulose fibers of less than 2 mm average length which have been subjected to these mechanical, chemical or enzymatic pretreatments or other well-known fiber modification procedures can be used in the present invention.

In some particular embodiments cellulose fibers of less than 2 mm average length are selected from hardwood kraft pulp (HKP), softwood kraft pulp (SKP) and their mixtures. In some particular embodiments cellulose fibers of less than 2 mm average length are selected from bleached hardwood kraft pulp (bHKP), bleached softwood kraft pulp (bSKP) and their mixtures. In some embodiments the cellulose fibers (bleached) hardwood kraft pulp ((b)HKP) and/or (bleached) softwood kraft pulp ((b)SKP) present an average length of between 0.5 and 1.9 mm, more particularly between 0.6 and 1.8 mm, and even more particularly between 0.7 and 1.7 mm. For example cellulose fibers present an average length of about 0.7 mm, or about 0.8 mm, or about 0.9 mm, or about 1.0 mm, or about 1.1 mm or about 1.2 mm, or about 1.3 mm, or about 1.4 mm or about 1.5 mm, or about 1.6 mm.

The method for preparing a cellulosic sponge can be carried out as disclosed in document EP3060603A1. Said method involves a step (i) of treating an aqueous suspension of cellulose fibers, as above defined, with periodate, thus creating aldehyde groups in their surface, and rendering a dialdehyde cellulose fibers suspension. The treatment of cellulose fibers with periodate is a well-known treatment to any person skilled in the art. In a particular embodiment sodium periodate is used. Ethylene glycol may be used to stop the reaction. In detail, cellulose fibers are first converted into dialdehyde cellulose fibers through periodate oxidation reaction. After filtering and cleaning the resulting reaction product, a water suspension of chemically modified fibers is obtained.

The aldehyde content may be determined according to the known hydroxylamine hydrochloride method (ISO 11402:2004), resulting in an aldehyde concentration which may vary within broad ranges, like from 0.05 to 12.3 milimol per gram of fibers ([CHO]=mmol/g), more particularly from 0.1 to 7.5 mmol/g, or more particularly from 0.2 to 3.5 mmol/g.

Thereafter in step (ii) the pH of the dialdehyde cellulose fibers suspension is adjusted to a value of pH 2.5 to 5.5 to allow that a reaction of the aldehydes with hydroxyls takes place, rendering cyclic acetal groups bonding the fibers. According to a particular embodiment the pH is adjusted to a value comprised between 2.7 and 5, preferably 3 and 4. The pH is adjusted usually with an acid, such as, but not limited to, glacial acetic acid or HCl.

The solid content of the dialdehyde cellulose fiber suspension can be controlled and regulated in each case, to give rise to cellulosic sponges of the different final densities and rigidities.

In a particular embodiment the solid content after pH adjustment is between 0.05 to 50 wt% in respect of the total weight of the suspension. In another particular embodiment the solid content is between 1 and 30wt%, more particularly between 1.5 and 10wt%. In a preferred embodiment the solid content is from 2 to 6wt% in respect of the total weight of the suspension, like for example 3wt%.

In step (iii) the dialdehyde cellulose fibers suspension resulting from step (ii) is poured in a container, like a mold or a tray and is then frozen at a temperature which typically can range between -1 and -25 °C, more particularly at a temperature between -15 and - 20°C, although lower temperatures are also possible without limitation.

Molds or trays may be made from plastic, and their dimensions and size may vary within broad ranges.

These conditions allow the reaction of aldehyde groups (-CHO) with hydroxyls (-OH) which, together with the presence of liquid water during the freezing process, are surprisingly found to promote the formation of a very stable 3D structure inside the ice, which is not created at other pH conditions. Aldehyde groups react with two neighbouring hydroxyl groups (i.e. diol) giving rise to stable cyclic acetals. This is a thermodynamically favoured reaction that generates stable covalent bonds, provided that water is progressively removed from the reaction system. In the present aqueous cellulose suspension, aldehyde groups have been introduced in the surface of some fibers in step (i) while diols are naturally present on every (unmodified) glucopyranose unit of cellulose. The growth of ice crystals, when the dialdehyde cellulose fibers suspension is frozen, progressively confines the dissolved chemicals (the lower the temperature the lower the solute's solubility) and the dialdehyde cellulose (DAC) fibers to the interstitial areas between the crystals, which at the same time promotes the physical formation of a 3-dimensional structure, increases the concentration of the reactive entities, maximizes the number of contact points among the fibers (i.e. reacting species), and more importantly removes the liquid water from the reaction medium, allowing the displacement of the reaction equilibrium towards the formation of cyclic acetal bridges between an aldehyde of one fiber and a diol of another fiber.

After the step of freezing, in step (iv) the thawing of the frozen 3D resulting structure renders the cellulosic sponge, which comprises a three dimensional structure of cross-linked cellulose fibers of less than 2 mm average length which are bonded by cyclic acetal groups.

Thawing is generally carried out at ambient temperature (typically comprised from 10 to 40 °C, although any higher temperature can be used) and takes typically around 24 hours depending on the size of the 3D structure and the temperature. The resulting cellulosic sponge keeps the shape of the container used in the freezing step and shows the consistency and appearance of a sponge totally soaked in an aqueous medium.

This cellulosic sponge presents unique properties as described below. For example, it is highly water absorbent and has been tested to retain more than 200 times its weight of water. The cellulosic sponge is a covalently built, consistent, 3D structure, comprising a three dimensional structure of cross-linked cellulose fibers of less than 2 mm average length which are bonded by cyclic acetal groups. These bonds are formed as above disclosed between at least an aldehyde group of a fiber and a diol of a different fiber. The properties of the 3D structure can only be justified in that the majority of the bonds in the three dimensional structure of cross-linked cellulosic fibers are cyclic acetal groups. The presence of other types of bonds between fibers such as acyclic acetal groups in small proportion is not discarded.

The nature of the covalent, cyclic acetal bonds gives the cellulosic sponge unique properties like high durability against both strong acidic (pH<1) and moderate alkaline (pH>9) conditions, in particular between about pH 0.3 and about pH 9.5.

The process for manufacturing a hybrid aerogel of the invention further comprises step (v) where the cellulosic sponge is squeezed to eliminate at least part of its water. As above mentioned the cellulosic sponge is highly water absorbent and has been tested to retain more than 200 times its weight of water.

In step (v) water can be easily squeezed out of the sponge by simple mechanical means, like pressing by hand or any other known means, without damaging the cellulosic sponge. An advantage of the stable 3D structure of the sponge is that the shape acquired by the sponge after pressing remains the same, due to fiber-fiber hydrogen bonds interactions. That is, this squeezed cellulosic sponge behaves as a *shape-memory* material, which means that when it is put back in contact with water (soaked), it recovers completely (-100%) the initial shape that the cellulosic sponge had before being pressed and squeezed. The remaining amount of water in the squeezed cellulosic sponge is variable, depending on the amount of water eliminated by squeezing, and is in any case always lower than the amount of water initially present in the cellulosic sponge as obtained in step (iv). In a particular embodiment the squeezed sponge comprises between 10 and 50wt% solids, and 50 to 90wt% water, more particularly between 20 and 40wt% solids, and 60 to 80wt% water, even more particularly between 30 and 35wt% solids and 65 to 70wt% water. Other ranges are also possible like 45wt% solids and 55wt% water, or 15wt% solids and 85wt% water.

The squeezed cellulosic sponge obtained in step (v) is in step (vi) soaked with a silica sol-gel precursor solution to which a basic catalyst has been added and its pH adjusted to pH 4 to 5.

In an embodiment a silica sol-gel precursor solution can be obtained as follows. First a water glass solution, which may be sodium silicate (Na₂SiO₃), is provided and diluted with distilled water. The resulting diluted water glass solution may contain then silicon dioxide (SiO₂) in an amount of 2 to 11 wt%, more specifically 3 to 9 wt%, and even more specifically 4 to 8 wt%. This water glass solution is put in contact with an ion exchange resin for water demineralization (elimination of the Na⁺) obtaining a silicic acid solution of pH 1 to 2, more specifically 1.8 to 1.9.

A basic catalyst is then added which may serve to form a reaction environment such that the reaction (sol-gel reaction) may proceed readily. For example, the basic catalyst may be added in an amount such that the pH is adjusted to pH 4 to 5, more specifically 4.2 to 4.8, for example 4.5. The basic catalyst is not particularly limited to, but may be, for example, ammonium hydroxide.

The sol-gel precursor solution is in an embodiment a silicic acid solution that may contain silicon dioxide (SiO₂) in an amount of 2 to 11 wt%, more specifically 3 to 9 wt%, and even more specifically 4 to 8 wt% comprising a basic catalyst, such as ammonium hydroxide, and having a pH of pH 4 to 5. In another embodiment the sol-gel precursor solution is a silicic acid solution that may contain silicon dioxide (SiO₂) in an amount of 2 to 11 wt%, more specifically 3 to 9 wt%, and even more specifically 4 to 8 wt% comprising ammonium hydroxide and having a pH of pH 4.5.

Step (vi) according to an embodiment of the present invention is a step of completely soaking the squeezed cellulosic sponge obtained in step (v) with the silica sol-gel precursor solution to which a basic catalyst has been added and its pH adjusted to 4 to 5. The squeezed cellulosic sponge recovers its initial shape, that is, the shape it had before being squeezed.

Step (vii) according to an embodiment of the present invention is a sol-gel method comprising:
a) allowing the soaked cellulosic sponge to stand for gelation;
b) submitting the resulting hybrid wet gel to aging;
c) washing and solvent exchange;
d) optionally a hydrophobization stage; and
e) drying to obtain the hybrid aerogel of the invention.

In the following, step (vii) will be described in detail.

Step a) is a step of forming a silica wet gel, where a silica network structure is formed from the silica precursor material in or within the 3D cellulosic sponge structure which serves like a skeleton. Step a) may be specifically carried out by allowing the soaked cellulosic sponge to stand at a temperature between 18 and 30 °C, for a period of time typically between 15 and 60 minutes, for example at 25 °C for 30 min.

The aging may be a step in which the hybrid wet gel obtained in step a) is left standing for 1 hour to 36 hours at 50 to 90°C, for example for 24 hours at 60 °C. According to the method of the present invention, the silica network structure in or within the 3D cellulosic sponge may be formed more firmly, so that the silica wet gel may be optimized and achieves enhanced mechanical stability.

Step c) is a step of washing the aged hybrid wet gel obtained in step b) with water and then exchanging the water with an organic solvent, such as isopropanol and n-hexane. The washing is for removing impurities (sodium ions, unreacted substances, byproducts, etc.) generated during the gelation and aging reactions to obtain the silica gel with high purity, and may be performed through repetitive addition of distilled water and discharging the wash solution. Then the water is exchanged by adding an organic solvent and discharging the aqueous solution.

In some embodiments after step c) the hybrid wet gel is directly submitted to a drying step e).

The drying step e) in the method according to an embodiment of the present invention may be performed by a supercritical drying process or an ambient drying process.

More specifically, the supercritical drying process is a supercritical CO₂ drying process that may be performed under pressures between 100 and 150 MPa, at temperatures between 70 to 90 °C for 5 to 10 hours.

More specifically, the ambient drying process may be performed under the conditions of a temperature of 70 to 100°C for 12 hour to 24 hours, and more specifically applying a temperature ramp in a conventional manner for example from 25 °C to 80 °C at 0,1 °C/min and then from 80 °C to 25 °C for 12 hours.

In some embodiments, step (vii) comprises a hydrophobization stage d) which is a step for the surface modification of the silica gel.

In the state of the art of the silica aerogels it is well known that silica aerogels absorb moisture which causes that the characteristics and physical properties of a gel structure are deteriorated. Therefore, in order to enhance in general the use of the hybrid aerogel of the invention, a hydrophobization stage, which is capable of permanently preventing moisture in the air from being absorbed, can be performed. Accordingly, methods for producing a silica aerogel having permanent hydrophobicity by hydrophobizing the surface thereof have been proposed.

Thus in some embodiments the process for manufacturing a hybrid aerogel of the invention comprises an additional hydrophobization stage, for providing permanent hydrophobicity to the silica aerogel.

Step d) according to an embodiment of the present invention may be performed by adding a surface modifier solution to the hybrid wet gel and causing a reaction.

The surface modifier solution may be prepared by adding the surface modifier to a non-polar organic solvent and then mixing. In this case, the concentration of the surface modifier in the surface modifier solution may be 30 to 60 wt%, more specifically 40 to 50 wt%.

The surface modifier may be at least one selected from the group consisting of trimethylchlorosilane (TMCS), hexamethyldisilazane (HMDS), methyltrimethoxysilane, trimethylethoxysilane, ethyltriethoxysilane, and phenyltriethoxysilane, and more specifically, may be hexamethyldisiloxane (HMDSO).

The non-polar organic solvent may be at least one selected from the group consisting of n-hexane, n-heptane, toluene and xylene, preferably n-hexane.

In addition, the surface modifier solution may be added in an amount such that the molar ratio of the surface modifier to the silicon dioxide in the water glass solution becomes 0.05 to 20, more specifically 0.5 to 10.

More preferably in this stage the hybrid wet gel is treated with hexamethyldisiloxane (HMDSO) in hexane. Treatment may be performed at temperatures between 20 to 30 °C for 12 to 24 hours.

After the hydrophobization stage is completed the resulting hybrid hydrophobized gel may be washed with an organic solvent such as n-hexane and then the said organic solvent may be exchanged with another organic solvent, such as isopropanol.

Thereafter the resulting hybrid hydrophobized gel is submitted to the drying step e) as above disclosed to render the hybrid aerogel of the invention.

In another aspect, the present invention provides a hybrid aerogel obtained by the process for manufacturing above disclosed or comprising: 1) a 3D cellulosic sponge and 2) a silica aerogel structure within or in said 3D cellulosic sponge, wherein said 3D cellulosic sponge comprises a three dimensional structure of cross-linked cellulose fibers of less than 2mm average length which are bonded by cyclic acetal groups.

The hybrid aerogel according to an embodiment of the present invention is characterized by having good insulation properties, presenting values of thermal conductivity of between 0.016 and 0.019 W/mK, preferably equal or higher than 0.017 W/mK, more preferably equal or higher than 0.018 W/mK measured by the hot-plate technique.

The hybrid aerogel according to an embodiment of the present invention may have different fiber concentrations which typically vary between 1.1 and 5.0 vol%, and are more specifically between 1.4 and 4.5 vol%, such as 2 vol %, 2.5 vol %, 3 vol %, 3.5 vol % or 4.0 vol% with respect to the total volume of the hybrid aerogel.

Further the hybrid aerogel according to an embodiment of the present invention may present apparent densities calculated by means of the following equation: density = weight/volume, of between 0.07 and 2 g/cm³, for example, between 0.1 and 0.5 g/cm³, such as 0.2 or 0.4 g/cm³.

The hydrophobicity of the hybrid aerogel according to an embodiment of the present invention when obtained according to the method comprising step e) is determined to be such that a 3 µL water droplet shows a contact angle of 120° to 140°, more specifically of 125° to 135°, for example 130° (determined using a OCA 15 PLUS contact angle meter from Dataphysics).

The hybrid aerogel according to an embodiment of the present invention is characterized by having improved mechanical properties. Flexural properties, are evaluated via 3-point bending tests in a Universal Testing Machine Instrom 5569 under UNE-EN-ISO-178 standard, and result in:
- Maximum Stress of 160 to 180 kPa, preferably equal or higher than 165 kPa, more preferably equal or higher than 170 kPa.
- Young Modulus of 6.0 and 7.0 MPa, preferably equal or higher than 6.2 MPa, more preferably equal or higher than 6.4 MPa and more preferably equal or higher than 6.6 MPa.
- Strain at maximum stress between 2 and 7%, preferably equal or higher than 2.2%, more preferably equal or higher than 2.8%, more preferably equal or higher than 3.5%, still more preferably equal or higher than 4.5%.

In some particular embodiments the hybrid aerogel is manufactured starting from cellulose fibers of average length between 0.6 and 1.5 mm, the solid content of the dialdehyde cellulose fiber suspension obtained in step (ii) after pH adjustment is between 1 to 6wt% in respect of the total weight of the suspension, the fiber content in the hybrid aerogel is between 0.4 and 3 vol% in respect to the total volume of the hybrid aerogel and the hybrid aerogel density is between 0.1 and 0.2 g/cm³.

In other particular embodiments the hybrid aerogel is manufactured starting from cellulose fibers of average length between 0.7 and 1.4 mm, the solid content of the dialdehyde cellulose fiber suspension obtained in step (ii) after pH adjustment is between 3 to 4wt% in respect of the total weight of the suspension, the fiber content in the hybrid aerogel is between 1.0 and 1.8 vol% in respect to the total volume of the hybrid aerogel and the hybrid aerogel density is between 0.12 and 0.16 g/cm³.

The hybrid aerogel of the invention can be used for different applications, in which advantage can be taken from its characteristics and properties of low thermal conductivity and high mechanical properties, for example as thermal and/or acoustic insulation elements, or for the fabrication of said elements, in the building or the aeronautic sector, or in refrigeration systems, or heat accumulators, to cite only a few.

Accordingly the use of the hybrid aerogel of the invention for the fabrication of a thermal and/or acoustic insulation element constitutes a further aspect of the invention.

### EXAMPLES

### EXAMPLE 1. Process for the preparation of a hybrid aerogel

### (Preparation of a cellulosic sponge)

1000g of a 10wt% solids content suspension of bleached hardwood kraft pulp (bHKP; 100g of dried pulp) with average fiber length 0.76mm, was dispersed in tap water under constant stirring to make it a 4wt% solids content suspension (2500g in total). This mixture was taken to a reactor totally preserved from light entrance, and added with 200g sodium chloride (NaCl) and 33.5g sodium metaperiodate (NaIO₄). After being allowed to react for 10h under constant agitation the resulting mixture containing dialdehyde cellulose (DAC) fibers was filtered and washed with fresh water twice. Aldehyde content was determined according to the hydroxylamine hydrochloride method reported elsewhere, resulting in an aldehyde concentration of 1 milimol per gram of fibers ([CHO]=1mmol/g=0.001mol/g). Dialdehyde cellulose fibers, together with 30g of glacial acetic, were resuspended in tap water acid to make up a homogeneous 3wt% solids content suspension of pH 3. Then 144g of this mixture were poured into a 12cm x 12cm x1cm plastic mould and taken to a freezer where it was allowed to freeze at -18°C overnight. When the frozen sample was thawed at room temperature a cellulosic sponge had been formed. The cellulosic sponge was washed several times with fresh tap water.

### (Preparation of silicic acid)

43.2g of a commercial waterglass solution (with 26.6wt% of SiO₂) were mixed with 120.8g of distilled water to prepare 164g of a sodium silicate (Na₂SiO₃) solution at 7wt% of SiO₂. This silicate solution was treated with 200ml of Amberlite IR 120H ion exchange resin under continuous stirring during 5 minutes at 25°C. After this time, the treated sodium silicate dispersion was filtered, obtaining 150ml of a silicic acid solution with pH 1.9.

### (Sol-gel reaction)

The pH value of the silicic acid solution was then adjusted to 4.5 through the addition of NH₄OH 0.5M. After having squeezed the water out from the cellulosic sponge, it was completely soaked with 150cm³ of the silicic acid solution. The soaked cellulosic sponge was allowed to stand at 25°C for 30 minutes for gelation, after which a hybrid gel was formed. In order to enhance the strength and stiffness of the wet gel, the hybrid gel formed was then submitted to an aging process by adding some distilled water onto it and allowing the mixture to stand at 60°C for 24h. The aged hybrid gel was washed three times with distilled water. Then the water was exchanged with isopropanol and the isopropanol was exchanged eventually with hexane.

### (Hydrophobization stage)

This hybrid wet gel was treated with an excess of an acidic solution of hexamethyldisiloxane (C₆H₁₈OSi₂) in hexane (50wt%) at 50°C for 1h and then at 25°C for 23h. After this time the treated hybrid gel was washed with hexane. Then the hexane inside the hybrid gel was exchanged by isopropanol.

### (Drying stage)

The resulting hybrid gel was then dried at ambient pressure applying a temperature ramp from 30 to 80°C at 0.1°C/min and then from 80°C to 25°C overnight.

### (Hybrid Aerogel properties)

The fiber concentration in the hybrid aerogel is 1.4 vol%. The resulting aerogel has an apparent density of 0.151g/cm³ (the density was calculated by means of the following equation: density=weight/volume). The value of thermal conductivity is of 0.017W/m*K, which was measured by the hot-plate technique. The hydrophobicity of the aerogel blankets, determined using a contact angle meter (OCA 15 PLUS de Dataphysics equipment), is such that a 3µL water droplet shows a contact angle of 130°.

### EXAMPLE 2. Process for the preparation of a hybrid aerogel

### (Preparation of a cellulosic sponge)

The same procedure as in example 1.

### (Preparation of silicic acid)

The same procedure as in example 1

### (Sol-gel reaction)

The same procedure as in example 1

### (Drying stage)

The resulting gel was dried with a supercritical CO₂ drying process (13 MPa, 80°C, 8h).

### (Hybrid Aerogel properties)

The fiber concentration in the hybrid aerogel is 1.4 vol%. The resulting aerogel has an apparent density of 0.132g/ml (the density was calculated by means of the following equation: density=weight/volume). Flexural properties, evaluated via 3-point bending tests in a Universal Testing Machine Instrom 5569 under UNE-EN-ISO-178 standard, result in maximum Stress 168kPa, Young Modulus 6.2MPa and Strain at maximum stress 2.5%.

### EXAMPLE 3. Process for the preparation of a hybrid aerogel

### (Preparation of a cellulosic sponge)

The same procedure as in example 1 but using bleached softwood kraft pulp (bSKP) with an average fiber length of 1.1mm.

### (Preparation of silicic acid)

The same procedure as in example 1

### (Sol-gel reaction)

The same procedure as in example 1

### (Drying stage)

The same procedure as in example 2 (CO₂ supercritical drying process).

### (Hybrid Aerogel properties)

The fiber concentration in the hybrid aerogel is 1.4 vol%. The resulting aerogel has an apparent density of 0.140g/ml (density=weight/volume). The mechanical properties evaluated by 3-point bending tests yield a maximum stress of 160kPa, the modulus 6.9MPa and the strain at maximum stress is of 5.6%. The value of the thermal conductivity is of 0.019W/mK.

## Claims

1. A process for manufacturing a hybrid aerogel which comprises:
(i) treating an aqueous suspension of cellulose fibers of less than 2 mm average length with periodate to render a dialdehyde cellulose fibers suspension;
(ii) adjusting the pH of the dialdehyde cellulose fibers suspension to a value between 2.5 and 5.5;
(iii) freezing the suspension obtained in step (ii) to render a three dimensional structure;
(iv) thawing the three dimensional structure obtained in step (iii) to render a cellulosic sponge;
(v) squeezing the water from the cellulosic sponge;
(vi) soaking the squeezed cellulosic sponge with a silica sol-gel precursor solution, wherein the sol-gel precursor solution is an aqueous silicic acid solution, wherein pH is adjusted in the range of 4 to 5 by adding a basic catalyst; and
(vii) carrying out a sol-gel method to obtain the hybrid aerogel.

2. A process according to claim 1, wherein the cellulose fibers are hardwood kraft pulp, softwood kraft pulp or mixtures thereof.

3. A process according to claim 1 or 2, wherein the cellulose fibers present an average length of between 0.5 and 1.9, more particularly between 0.6 and 1.8, and even more particularly between 0.7 and 1.7.

4. A process according to any one of claims 1 to 3, wherein the suspension obtained in step (ii) present a solid content from 2 to 6wt% in respect of the total weight of the suspension, like for example 3wt%.

5. A process according to any one of claims 1 to 4, wherein the silicic acid solution contains silicon dioxide (SiO₂) in an amount of 2 to 11 wt%, more specifically 3 to 9 wt%, and even more specifically 4 to 8 wt%, comprises ammonium hydroxide and has a pH of pH 4.5.

6. A process according to any one of claims 1 to 5, wherein step (vii) comprises:
a) allowing the soaked cellulosic sponge to stand for gelation;
b) submitting the resulting hybrid wet gel to aging;
c) washing and solvent exchange;
d) optionally a hydrophobization stage; and
e) drying to obtained the hybrid aerogel of the invention.

7. A process according to claim 6 wherein step a) is carried out by allowing the soaked cellulosic sponge to stand at a temperature between 18 and 30 °C, for a period of time between 15 and 60 minutes.

8. A process according to claim 6 or 7, wherein in step b) the hybrid wet gel is left standing for 1 hour to 36 hours at 50 to 90°C, for example for 24 hours at 60 °C.

9. A process according to any one of claims 6 to 8, wherein washing is carried out with water and then the water is exchanged with an organic solvent.

10. A process according to any one of claims 6 to 9, wherein the drying step e) is performed by a supercritical drying process or is an ambient drying process.

11. A process according to any one of claims 6 to 10, which comprises an hydrophobization stage performed by adding a surface modifier solution to the hybrid wet gel obtained in step c) selected from the group consisting of trimethylchlorosilane (TMCS), hexamethyldisilazane (HMDS), methyltrimethoxysilane, trimethylethoxysilane, ethyltriethoxysilane, and phenyltriethoxysilane.

12. A hybrid aerogel obtained by process for manufacturing according to any one of previous claims or comprising: 1) a 3D cellulosic sponge and 2) a silica aerogel structure within or in said 3D cellulosic sponge, wherein said 3D cellulosic sponge comprises a three dimensional structure of cross-linked cellulosic fibers of less than 2mm average length which are bonded by cyclic acetal groups.

13. The hybrid aerogel according to claim 12, **characterized in that** the hybrid aerogel is manufactured starting from cellulose fibers of average length between 0.6 and 1.5 mm, the solid content of the dialdehyde cellulose fiber suspension obtained in step (ii) after pH adjustment is between 1 to 6wt% in respect of the total weight of the suspension, the fiber content in the hybrid aerogel is between 0.4 and 3 vol% in respect to the total volume of the hybrid aerogel and the hybrid aerogel density is between 0.1 and 0.2 g/cm³.

14. Use of the hybrid aerogel according to claims 12 or 13, as thermal and/or acoustic insulation element, or for the fabrication of such an element.

## Patentansprüche

1. Verfahren zur Herstellung eines Hybrid-Aerogels, bei dem man:
(i) eine wässrige Suspension von Zellulosefasern mit weniger als 2 mm durchschnittlicher Länge mit Periodat behandelt, um eine Dialdehyd-Zellulosefaser-Suspension bereitzustellen,
(ii) Einstellen des pH der Dialdehyd-Zellulosefaser-Suspension auf einen Wert zwischen 2,5 und 5,5,
(iii) Einfrieren der in Schritt (ii) erhaltenen Suspension, um eine dreidimensionale Struktur bereitzustellen,
(iv) Auftauen der dreidimensionalen Struktur, die in Schritt (iii) erhalten wurde, um einen Zelluloseschwamm bereitzustellen,
(v) Herauspressen des Wassers aus dem Zelluloseschwamm,
(vi) Durchtränken des ausgepressten Zelluloseschwammes mit einer Siliziumdioxid-Sol-Gel-Vorläuferlösung, wobei die Sol-Gel-Vorläuferlösung eine wässrige Kieselsäurelösung ist, wobei der pH durch Zusatz eines basischen Katalysators in dem Bereich von 4 bis 5 eingestellt wird, und
(vii) Ausführung eines Sol-Gel-Verfahrens, um das Hybrid-Aerogel zu erhalten.

2. Verfahren nach Anspruch 1, wobei die Zellulosefasern Hartholz-Kraftzellstoff, Weichholz-Kraftzellstoff oder Gemische davon sind.

3. Verfahren nach Anspruch 1 oder 2, wobei die Zellulosefasern eine durchschnittliche Länge von zwischen 0,5 und 1,9, vorzugsweise zwischen 0,6 und 1,8 und noch bevorzugter zwischen 0,7 und 1,7 aufweisen.

4. Verfahren nach einem der Ansprüche 1 bis 3, wobei die Suspension, die in Schritt (ii) erhalten wird, einen Feststoffgehalt von 2 bis 6 Gew.-% bezogen auf das Gesamtgewicht der Suspension aufweist, wie zum Beispiel 3 Gew.-%.

5. Verfahren nach einem der Ansprüche 1 bis 4, wobei die Kieselsäurelösung Siliziumdioxid (SiO₂) in einer Menge von 2 bis 11 Gew.-% enthält, noch bevorzugter 3 bis 9 Gew.-% und insbesondere bevorzugt 4 bis 8 Gew.-%, und Ammoniumhydroxid enthält und einen pH von pH 4,5 aufweist.

6. Verfahren nach einem der Ansprüche 1 bis 5, wobei der Schritt (vii) Folgendes umfasst:
a) Stehenlassen des durchtränkten Zelluloseschwammes zur Ermöglichung der Gelbildung,
b) Durchführung einer Reifung des resultierenden Hybrid-Nassgels,
c) Waschen und Lösungsmittelaustausch,
d) optional eine Hydrophobisierungs-Stufe und
e) Trocknen des erhaltenen Hybrid-Aerogels, um das erfindungsgemäße Hybrid-Aerogel zu erhalten.

7. Verfahren nach Anspruch 6, wobei Stufe a) durchgeführt wird, indem man den durchtränkten Zelluloseschwamm bei einer Temperatur zwischen 18 und 30 °C über einen Zeitraum von zwischen 15 und 60 Minuten stehen lässt.

8. Verfahren nach Anspruch 6 oder 7, wobei in Stufe b) das Hybrid-Nassgel für 1 Stunde bis 36 Stunden bei 50 bis 90 °C stehengelassen wird, z.B. für 24 Stunden bei 60 °C.

9. Verfahren nach einem der Ansprüche 6 bis 8, wobei das Waschen mit Wasser durchgeführt wird, und dann das Wasser mit einem organischen Lösungsmittel ausgetauscht wird.

10. Verfahren nach einem der Ansprüche 6 bis 9, wobei der Trocknungsschritt e) mit einem superkritischen Trocknungsverfahren durchgeführt wird oder ein Trocknungsverfahren bei Umgebungstemperatur ist.

11. Verfahren nach einem der Ansprüche 6 bis 10, welches eine Hydrophobisierungs-Stufe umfasst, bei der man zu dem in Schritt c) erhaltenen Hybrid-Nassgel eine Oberflächenmodifikationslösung gibt, ausgewählt aus der Gruppe bestehend aus Trimethylchlorsilan (TMCS), Hexamethyldisilazan (HMDS), Methyltrimethoxysilan, Trimethylethoxysilan, Ethyltriethoxysilan und Phenyltriethoxysilan.

12. Hybrid-Aerogel, erhalten nach einem Herstellungsverfahren gemäß einem der vorangehenden Ansprüche oder mit: 1) einem 3D-Zelluloseschwamm und 2) einer Siliziumdioxid-Aerogelstruktur innerhalb oder in dem 3D-Zelluloseschwamm, wobei der 3D- Zelluloseschwamm eine dreidimensionale Struktur von quervernetzten Zellulosefasern von weniger als 2 mm durchschnittlicher Länge, die über zyklische Acetalgruppen verbunden sind, umfasst.

13. Hybrid-Aerogel nach Anspruch 12, **dadurch gekennzeichnet, dass** das Hybrid-Aerogel hergestellt wird ausgehend von Zellulosefasern mit einer durchschnittlichen Länge zwischen 0,6 und 1,5 mm, wobei der Feststoffgehalt der Dialdehyd-Zellulosefaser-Suspension, die in Schritt (ii) erhalten wird, nach pH-Einstellung zwischen 1 bis 6 Gew.- % bezogen auf das Gesamtgewicht der Suspension beträgt, wobei der Fasergehalt in dem Hybrid-Aerogel zwischen 0,4 und 3 Vol.-% bezogen auf das Gesamtvolumen des Hybrid-Aerogels beträgt, und wobei die Dichte des Hybrid-Aerogels zwischen 0,1 und 0,2 g/cm³ beträgt.

14. Verwendung des Hybrid-Aerogels nach den Ansprüchen 12 oder 13, als thermisches und/oder akustisches Isolierelement oder für die Herstellung eines solchen Elements.

## Revendications

1. Procédé de fabrication d'un aérogel hybride, comprenant les étapes de :
(i) traitement d'une suspension aqueuse de fibres de cellulose de moins de 2 mm de longueur moyenne avec du periodate pour obtenir une suspension de fibres de cellulose dialdéhyde ;
(ii) ajustement du pH de la suspension de fibres de cellulose dialdéhyde à une valeur comprise entre 2,5 et 5,5 ;
(iii) congélation de la suspension obtenue à l'étape (ii) pour obtenir une structure tridimensionnelle ;
(iv) décongélation de la structure tridimensionnelle obtenue à l'étape (iii) pour obtenir une éponge cellulosique ;
(v) pressage de l'eau de l'éponge cellulosique ;
(vi) imprégnation de l'éponge cellulosique pressée avec une solution de précurseur sol-gel de silice, dans laquelle la solution de précurseur sol-gel est une solution aqueuse d'acide silicique, le pH étant ajusté dans la fourchette de 4 à 5 par ajout d'un catalyseur basique ; et
(vii) mise en oeuvre d'un procédé sol-gel pour obtenir l'aérogel hybride.

2. Procédé selon la revendication 1, dans lequel les fibres de cellulose sont de la pâte kraft de bois dur, de la pâte kraft de bois tendre ou des mélanges de celles-ci.

3. Procédé selon la revendication 1 ou 2, dans lequel les fibres de cellulose présentent une longueur moyenne comprise entre 0,5 et 1,9, plus particulièrement entre 0,6 et 1,8, et encore plus particulièrement entre 0,7 et 1,7.

4. Procédé selon l'une quelconque des revendications 1 à 3, dans lequel la suspension obtenue à l'étape (ii) présente une teneur en solides comprise entre 2 à 6 % en poids par rapport au poids total de la suspension, par exemple 3 % en poids.

5. Procédé selon l'une quelconque des revendications 1 à 4, dans lequel la solution d'acide silicique contient du dioxyde de silicium (SiO₂) en une quantité comprise entre 2 et 11 % en poids, plus spécifiquement entre 3 et 9 % en poids, et encore plus spécifiquement entre 4 et 8 % en poids, comprend de l'hydroxyde d'ammonium et a un pH de pH 4,5.

6. Procédé selon l'une quelconque des revendications 1 à 5, dans lequel l'étape (vii) comprend les étapes consistant à :
a) laisser reposer l'éponge cellulosique imprégnée pour la gélification ; b)
b) soumettre le gel hybride humide résultant à un vieillissement ;
c) laver et échanger le solvant ;
d) éventuellement une étape d'hydrophobisation ; et
e) sécher pour obtenir l'aérogel hybride de l'invention.

7. Procédé selon la revendication 6, dans lequel l'étape a) est réalisée en laissant reposer l'éponge cellulosique imprégnée à une température comprise entre 18 et 30 °C, pendant une durée comprise entre 15 et 60 minutes.

8. Procédé selon la revendication 6 ou 7, dans lequel, à l'étape b), le gel hybride humide est laissé au repos pendant 1 heure à 36 heures entre 50 et 90 °C, par exemple pendant 24 heures à 60 °C.

9. Procédé selon l'une quelconque des revendications 6 à 8, dans lequel le lavage est effectué avec de l'eau, puis l'eau est échangée par un solvant organique.

10. Procédé selon l'une quelconque des revendications 6 à 9, dans lequel l'étape de séchage e) est réalisée par un procédé de séchage supercritique ou est un procédé de séchage ambiant.

11. Procédé selon l'une quelconque des revendications 6 à 10, qui comprend une étape d'hydrophobisation réalisée par ajout d'une solution de modification de surface au gel hybride humide obtenu à l'étape c), choisie dans le groupe constitué par le triméthylchlorosilane (TMCS), l'hexaméthyldisilazane (HMDS), le méthyltriméthoxysilane, le triméthyléthoxysilane, l'éthyltriéthoxysilane et le phényltriéthoxysilane.

12. Aérogel hybride obtenu par un procédé de fabrication selon l'une quelconque des revendications précédentes ou comprenant : 1) une éponge cellulosique 3D et 2) une structure d'aérogel de silice à l'intérieur ou dans ladite éponge cellulosique 3D, ladite éponge cellulosique 3D comprenant une structure tridimensionnelle de fibres cellulosiques réticulées de moins de 2 mm de longueur moyenne qui sont liées par des groupes acétal cycliques.

13. Aérogel hybride selon la revendication 12, **caractérisé en ce que** l'aérogel hybride est fabriqué à partir de fibres de cellulose de longueur moyenne comprise entre 0,6 et 1,5 mm, la teneur en solides de la suspension de fibres de cellulose dialdéhyde obtenue à l'étape (ii) après ajustement du pH étant comprise entre 1 et 6 % en poids par rapport au poids total de la suspension, la teneur en fibres dans l'aérogel hybride étant comprise entre 0,4 et 3 % en volume par rapport au volume total de l'aérogel hybride, et la densité de l'aérogel hybride étant comprise entre 0,1 et 0,2 g/cm³.

14. Utilisation de l'aérogel hybride selon les revendications 12 ou 13, comme élément d'isolation thermique et/ou acoustique, ou pour la fabrication d'un tel élément.
